# EUROPEAN PATENT APPLICATION

(11) **EP 4 546 276 A1**
(43) Date of publication of application: **30.04.2025**
(21) Application number: 24207540.6
(22) Date of filing: 18.10.2024
(51) Int. Cl.: G06T 19/00, H04N 13/117, H04N 21/218

(54) **METHOD AND ARRANGEMENT FOR GENERATING AUGMENTED VIDEO OF AN EVENT**

(30) Priority: 23.10.2023 SE 2351212
(71) Applicant: Sony Group Corporation, Tokyo 108-0075 (JP)
(72) Inventor: PETEF, Andrej, Basingstoke, RG22 4SB (GB)
(74) Representative: Neij & Lindberg AB

(57) **Abstract**

A method of generating augmented video of an event at a venue involves providing (101) an immersive experience to an observer in a physical space of being present at the event. The immersive experience is provided by generating, based on video data of the event, and displaying a first rendered video in the physical space while performing realtime adjustment of the first rendered video to the momentary viewpoint of the observer. The method further includes determining (102) a time sequence of momentary locations and body poses of the observer in the physical space while the first rendered video is displayed, and generating (103) a rendered video that includes the observer as an added actor in the event, based on the video data and the momentary locations and body poses of the observer. The rendered video may represent the event from an external viewpoint or from a personal viewpoint of the observer as included in the event.

## Description

### Technical Field

The present disclosure relates generally to production of moving visual media and, in particular, a technique for processing of video data of an event for augmentation and customization.

### Background Art

The production of moving visual media, known as video, of an event at a venue is traditionally performed by switching between the output of different video cameras located at the venue.

More recently, a technique has been presented that allows a video feed of an event at a venue to be produced from any selected viewpoint. The technique is coined Intel^{®} True View and is used to produce video of sporting events. Dozens of cameras are installed in a ring around the venue, capturing the entire field of play. The cameras generate volumetric data (voxels), which represent height, width, and depth. By processing the voxels from the cameras, a virtual representation of the sporting event is recreated in 3D. Thereby, a video feed may be produced from an arbitrarily placed or moving viewpoint in the virtual representation. Such a video feed may be broadcast in regular 2D to home TV viewers as a game replay, for example quickly after the actual realtime gameplay sequence.

In conventional broadcasting of sporting events, it is also common to present replays. For example, a commentator may stand at a touch-sensitive display that allows the commentator, for example during a break in the sporting event, to start and stop a video sequence and draw lines on the display to explain and highlight interesting occurrences.

There is a general desire to provide new ways of producing augmented video of events, for example to further increase the engagement of the viewers or provide new insights about the event to the viewers. This desire is not limited to sporting events but is applicable to all types of events that may be recorded and presented to a viewer. The events need not be for entertainment but could, for example, be taking place in a production plant.

### Brief Summary

It is an objective to at least partly overcome one or more limitations of the prior art.

Another objective is to provide a technique for generating augmented video of an event to allow a viewer to gain further insights about the event.

Another objective is to provide a technique for generating augmented video that increases the engagement of the viewer.

One or more of these objectives, as well as further objectives that may appear from the description below, are at least partly achieved by a method of generating augmented video of an event at a venue and a corresponding arrangement according to the independent claims, embodiments thereof being defined by the dependent claims.

Still other objectives, as well as features, aspects and technical effects will appear from the following detailed description, from the attached claims as well as from the drawings.

### Brief Description of Drawings

FIG. 1A is a perspective view of a venue with an on-going event, and FIG. 1B is 3D reproduction of the event generated based on video data recorded by cameras at the venue in FIG. 1A.
FIG. 2 is a perspective view of a studio for immersive replay of video data of an event.
FIGS 3-4 are flow charts of example methods for generating augmented video in accordance with embodiments.
FIG. 5 illustrates a technique for recreating a 3D pose of an individual based on image data.
FIG. 6 is block diagram of an example system for generating augmented video in accordance with embodiments.
FIG. 7 is a flow chart of an example method of operating the system in FIG. 6.
FIG. 8 is a plan view of an example handheld device for controlling immersive replay in the studio of FIG. 2.

### Detailed Description of Example Embodiments

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements.

Also, it will be understood that, where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. As used herein, "at least one" shall mean "one or more" and these phrases are intended to be interchangeable. Accordingly, the terms "a" and/or "an" shall mean "at least one" or "one or more", even though the phrase "one or more" or "at least one" is also used herein. As used herein, except where the context requires otherwise owing to express language or necessary implication, the word "comprise" or variations such as "comprises" or "comprising" is used in an inclusive sense, that is, to specify the presence of the stated features but not to preclude the presence or addition of further features in various embodiments.

As used herein, the terms "multiple", "plural" and "plurality" are intended to imply provision of two or more elements, unless stated otherwise. The term "and/or" includes any and all combinations of one or more of the associated listed elements.

It will furthermore be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing the scope of the present disclosure.

Well-known functions or constructions may not be described in detail for brevity and/or clarity. Unless otherwise defined, all terms (including technical and scientific terms) used herein have the same meaning as commonly understood by one of ordinary skill in the art to which this disclosure belongs.

While operations are depicted in the drawings in a particular order, this should not be understood as requiring that such operations be performed in the particular order shown or in sequential order, or that all illustrated operations be performed, to achieve desirable results.

Like reference signs refer to like elements throughout.

Before describing embodiments in more detail, a few definitions will be given.

As used herein, an "event" refers to an activity that is performed by one or more objects, which may be animate or inanimate.

As used herein, a "venue" is a designated place or facility where an event may take place.

As used herein, "rendering" refers to a process of generating a photorealistic or non-photorealistic image from a model by means of a computer program. A rendered image or rendered video is produced by such rendering.

In some embodiments, the present disclosure provides a technique for generating a video of an event that has taken place at a venue. The video is augmented with an "observer", who is added as an actor in the event at the venue. The added actor is an active participant in the event without altering its course. In other words, the added actor can move around at the venue, within the event. The video may be generated from an external viewpoint onto the event with the added actor therein and/or from the viewpoint of the added actor in the event. The presence of the added actor makes the video go beyond a conventional replay of the event and allows the viewer to gain new insights about the event. The video may be generated to get a viewer of the video a sense of being present during the event, through the presence of the observer. This will increase the engagement of the viewer.

The event may be a sporting event, and the observer may be a commentator. The following description is given for an event in the form of a football (soccer) match taking place at a football stadium. However, the description is equally applicable to any type of sporting event, such as a rugby match, a golf tournament, a tennis match, a basketball match, a volleyball match, an athletics event, a dancing competition, etc. The description is also applicable to entertainment events, such as a concert, a theater performance, etc. The event need not be a match or competition but could be a training session for such a match or competition.

The description is likewise applicable to any type of fitness session in which one or more individuals perform an activity of fitness training, for example in a gym or outdoors. The added actor will be able to move around at the training site to highlight strengths and weaknesses.

The description is likewise applicable in more technical settings. For example, the venue may be a production plant such as a factory, and the event may be a production process taking place in the factory. The production process may involve production steps performed by machines and/or humans. By the technique proposed herein, a video can be produced to include an added actor that is capable of moving around in the production facility during the production process, for example to highlight weaknesses, evaluate the performance of machines and/or individuals, identify potential sources of errors, identify potential improvements to be made, etc. Thus, the video allows a viewer to gain further insights about the production process.

In another example, the venue may be a training site for extravehicular activity (EVA), and the event may be a training session performed by one or more individuals in a weightless environment. By the technique proposed herein, a video can be produced to include an added actor that is capable of moving around in the training site during the training session and act similar to a sports commentator. Such a video allows a viewer, for example an individual that has taken part in the training session, to glean insights that cannot be gained from a replay of a conventional video of the training session.

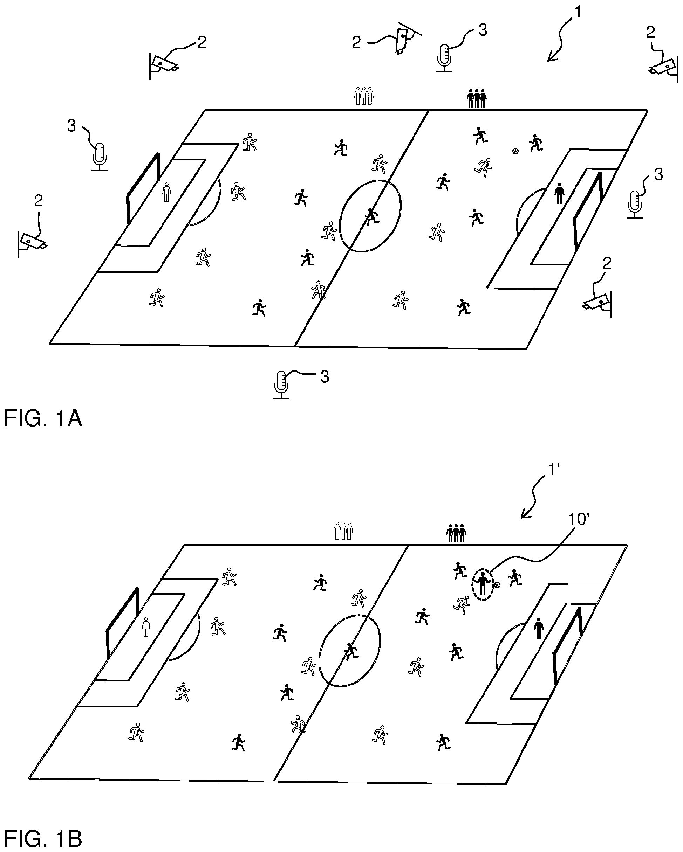

FIG. 1A is a perspective view of a moment during a football match (event) that takes place in a football field or stadium 1 (venue). A plurality of video cameras 2 are arranged to generate a respective video feed of the football match, and a plurality of microphones 3 are arranged to capture sound during the football match. The video feeds from the cameras 2 are jointly denoted "video data" in the following. The video data is thus a recording of the event. The video cameras 2 may be configured to generate ordinary 2D images or volumetric data as mentioned in the Background section.
FIG. 1B shows a still image from a rendered video ("output video") of at least part of the football match. The output video takes place at a rendered football field 1' with rendered players. The still image in FIG. 1B is taken at the same moment as FIG. 1A. As seen, the output video includes an added individual 10', which operates as an additional actor within the football match. The rendered actor 10' cannot change the course of the football match but may move around and perform gestures in a realistic way on the rendered football field 1' during the football match. The output video may include any external view onto the actor 10' on the football field 1' during the football match, for example at any desired angle and at any desired zoom level. Further, as will be described in more detail below, the output video may be rendered as if it was seen through the eyes of the actor 10' on the football field 1 during the football match.

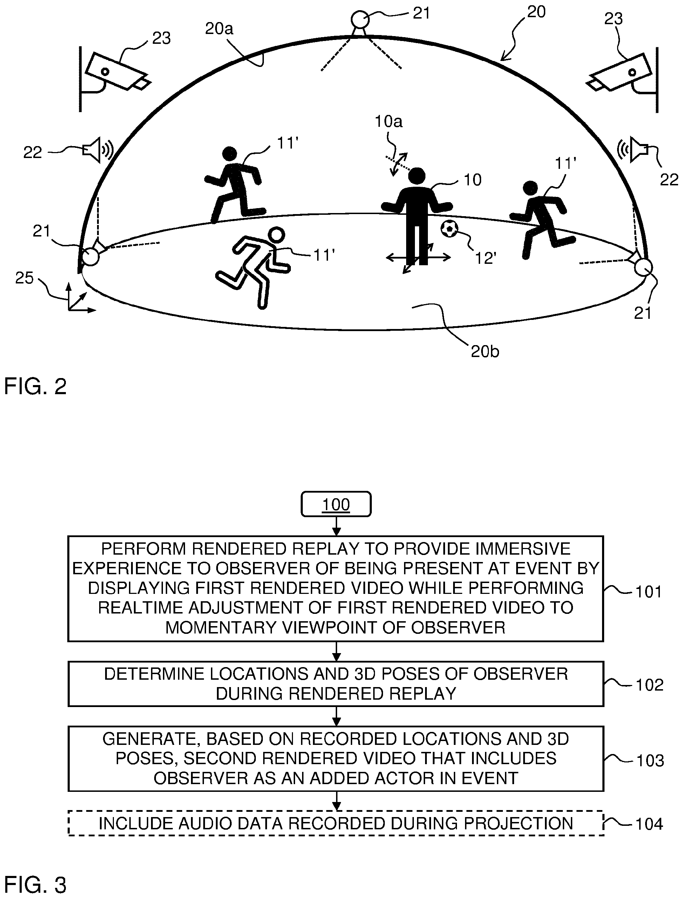

FIG. 2 shows a studio 20 that is used in the production of the output video, specifically to capture the movement of an individual ("observer") 10 that corresponds to the actor 10' in the output video. The studio 20 defines a physical space that allows the observer 10 to freely move around, as indicated by double-ended arrows on the floor 20b. In the illustrated example, the physical space is shaped as a half-sphere, or "dome-shaped". Thus, the physical space is delimited by a dome-shaped wall 20a and the floor 20b. A plurality of projectors 21 are arranged at the studio 20 to project moving images on the wall 20a and possibly on the floor 20b. The projectors 21 may be arranged to project the moving images from within the studio and/or from the outside of the studio. One or more speakers 22 (two shown) may be arranged to output an audio track. A plurality of cameras 23 are arranged to capture images of the scene in the studio, specifically to capture the movement of the observer 10 within the studio 20.
FIG. 3 is a flowchart of an example method of generating the above-mentioned output video by use of the studio 20 in FIG. 2. The method in FIG. 3 presumes that a "first rendered video" of the football match is rendered in realtime in the studio 20 based on video data recorded by the cameras 2 at the venue 1. The first rendered video is rendered for presentation through the specific arrangement of projectors 21 in the studio 20. The display of the first rendered video is performed in step 101. The purpose of step 101 is to perform a rendered replay of the event to provide an immersive experience to the observer 10 of being present at the event. To this end, step 101 involves projecting the first rendered video in the studio 20 by the projectors 21 while performing realtime adjustment of the first rendered video to the momentary viewpoint 10a of the observer 10 in the studio 20. Thus, step 101 involves determining the momentary viewpoint 10a of the observer 10 and momentarily adjusting the first rendered video accordingly, so as to provide the immersive experience. In other words, the first rendered video is rendered in realtime based on the momentary viewpoint 10a. Thereby, through the immersive experience, the observer 10 perceives a three-dimensional (3D) environment that is rendered to reproduce the event.

The momentary viewpoint 10a may be represented as a 3D vector in a fixed coordinate system 25 of the studio 20. Such a 3D vector has an origin at the head of the observer 10 and a direction. The momentary viewpoint 10a may be determined by any suitable technique. In some embodiments, the viewpoint 10a is determined from the orientation of the observer's 10 head. In some embodiments, the head orientation is determined from the video feeds that are generated by the cameras 23, for example by computer vision processing. This obviates the need to install additional equipment at the studio 20 for determination of the viewpoint 10a. However, the head orientation may generally be determined by use of any technique for motion capture, be it based on optical imaging or not. Further, as will be described below, a dedicated gaze tracking system may be installed at the studio 20 to determine the momentary gaze direction of the observer 10, and the momentary viewpoint 10a may be given by the combination of the head orientation, and the gaze direction in relation to the head orientation. By accounting for the momentary gaze direction, the immersive experience of the observer may be further enhanced.

In the example of FIG. 2, the observer 10 is able to move around in the studio 20 while a scene from the event is displayed on the wall 20a, and optionally on the floor 20b, by projection of the first rendered video by the projectors 21. In the illustrated example, the scene is a region on the football field where the ball is currently located. As indicated in FIG. 2, rendered players 1 1' and a rendered ball 12' are displayed in the studio 20. By repeatedly adapting the first rendered video and thus the displayed scene to the momentary viewpoint 10a of the observer 10, the observer gets the perception of actually being present within the football match, i.e. an immersive experience. This perception may be further enhanced by reproducing the sound from the football match in synchronization with the displayed scene via the speaker(s) 22.

To further explain the experience of the observer 10 in the studio 20, the first rendered video is generated, at a given time point, by rendering one or more objects, which are reproduced in the video data from the cameras 2 (FIG. 1A), with a position and an orientation that are adapted to an apparent viewpoint of the observer at the given time point. The apparent viewpoint of the observer is obtained by converting the momentary viewpoint 10a in the studio into a corresponding viewpoint within the displayed scene. The apparent viewpoint is thus the viewpoint of the observer when present in the event as displayed in the studio 20. In the example of FIG. 2, the position and orientation of the players 1 1' and the ball 12' are thus adapted to the apparent viewpoint of the observer 10, by use of the momentary viewpoint 10a.

The studio 20 in FIG. 2 is merely given as an example. For example, the studio 20 may have another shape, such as cuboid or full sphere. Further, the studio 20 may include a single projector 21 or plural projectors 21. It is also conceivable to replace or supplement the projectors 21 by one or more display screens mounted on the floor and/or the wall(s) of the studio 20. The studio 20 may be configured to mimic existing immersive video projection environments. One such environment is "Fulldome" video projection, which is used in various planetariums and digital theatres around the world. Another example is the spherical projection theater "Space 360" in Korea. In another alternative, the studio 20 may be designed to include immersive displays, for example from Visual Displays Ltd. These immersive displays require the observer to wear dedicated 3D glasses to have the immersive experience.

Returning to the method 100 in FIG. 3, step 102 involves determining, and optionally recording, the location and body pose of the observer in the studio 20 during the display of the first rendered video in step 101. The body pose is a three-dimensional (3D) pose of the observer in the coordinate system 25 of the studio. The location and the body pose are determined by motion capture through computer vision processing of the video feeds from the cameras 23 at the studio 20. The determination of the body pose from the video feeds may require the cameras 23 to have at least partially overlapping fields of views.

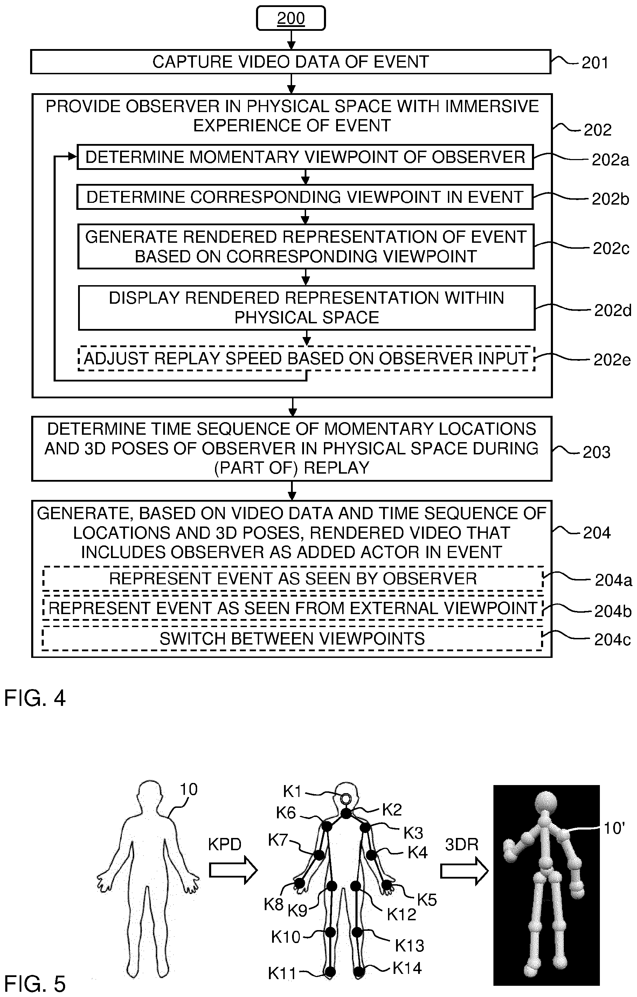

There are existing techniques for motion capture that operate on time-synchronized images from a plurality of cameras, allowing for recreation of the 3D pose of an individual over time, as well as the location of the individual within the studio. One such technique is schematically represented in FIG. 5. Here, predefined points of interest are identified in images of the individual and used for determining a 3D pose of the individual. The points of interest are commonly denoted "feature points" or "keypoints" and may represent predefined joints of the skeleton as well as predefined extremities such as head, feet and hands. In FIG. 5, a process for keypoint detection (KPD) is operated on a digital image of an individual 10 and results in a set of keypoints K1-K14. Assuming that the individual is depicted in images taken from at least two different directions and that each image results in a set of keypoints, it is possible to reconstruct the 3D pose of the individual based on the sets of keypoints, for example by use of triangulation processing and/or neural networks. In FIG. 5, a process of 3D reconstruction and rendering (3DR) is operated on a plurality of keypoint sets (one shown) to determine and render the 3D pose 10' of the individual 10. Provided that the cameras 23 are properly calibrated in relation to the studio 20, the location of the 3D pose in the studio is also obtained through the 3D reconstruction. It may be noted that the keypoints may but need not be indicated by dedicated markers on the individual 10. Examples of marker-based and markerless motion capture techniques that may be used in step 102 are, for example, found in the articles *"*The development and evaluation of a fully automated markerless motion capture workflow", by Needham et al, published in Journal of Biomechanics 144 (2022) 111338, and "A Review of the Evolution of Vision-Based Motion Analysis and the Integration of Advanced Computer Vision Methods Towards Developing a Markerless System", by Colyer et al, published in Sports Medicine - Open (2018) 4:24, which are incorporated herein by reference. Another technique for recreating the body pose based on images is known as "volumetric capture" (also known as "volumetric video"), which results in 3D volumetric representations ("holograms") of the individual. For volumetric capture, one or more cameras may be configured to also provide depth information, for example the distance or range from the camera to different positions on the individual. Example techniques for volumetric capture are found in the article *"*High-quality streamable free-viewpoint video", by Collet et al, published in ACM Transactions on Graphics 34 (4): 69:1-69:13 (2015).

In step 103 of the method 300 in FIG. 3, a second rendered video is generated, based on the locations and 3D poses that were determined in step 102 and the video data from the cameras 2 at the venue 1 (FIG. 1A), to include the observer 10 as an actor in the event. The second rendered video corresponds to the above-mentioned "output video". It is to be noted that the second rendered video is not a recording of the observer in the studio 20 but a rendering of the event with the observer being added to perform the movement from the studio at the proper place and time during the rendered event. Here, proper place and time means that the observer is included in the second rendered video to perform, in relation to the event, the same movement as in the studio 20 when the event was displayed to the observer 10.

The observer may be represented in the second rendered video by an avatar or by a photorealistic reproduction. If volumetric capture (above) is used for motion capture, a photorealistic reproduction of the observer may be automatically obtained as part of the reconstruction of the 3D pose.

As shown by dashed lines in FIG. 3, the method 100 may include a step 104 of including, in the second rendered video, audio data that was recorded while the first rendered video was displayed in the studio 20. The audio data thus forms part of an audio track of the second rendered video. The audio data may be recorded by one or more microphones (not shown) in the studio 20. The audio data may be recorded during step 101 and may include a spoken commentary made by the observer during display of the first rendered video. For example, the observer may wear a microphone. Such audio data is time-synchronized between the first and second rendered videos.

In some embodiments, the audio data also includes sound recorded by one or more microphones 3 at the venue 1 during the event. Such event-generated sound may be included in the audio track of the second rendered video in time-synchronization with the event to provide a realistic auditory environment to a viewer of the second rendered video. In some embodiments, the event-generated sound is reproduced in the audio track as it would have been perceived by the observer in the event. This means that the event-generated sound is adapted to the local environment of the observer in the second rendered video, based on the momentary orientation of the observer's head. In other words, spatial sound information as perceived by the observer 10 can be recorded and encoded to render a similarly realistic audio experience in the consumer's environment, in line with the rendered visual experience.

It is realized that the method 100 allows the role of a sports commentator to be taken to the next level of immersive experience. Conventionally, the sports commentator watches the football game either from a distance at the venue or on a TV screen, hence commenting from a distance on what is happening "down there" on the game floor. By the method 100, the commentator is given the ability to experience the gameplay as if he/she were on the field when the gameplay happened, i.e. a fully immersive experience. The immersive experience is likely to increase the engagement of the commentator. During the immersive experience, the commentator may provide the above-mentioned spoken commentary on the gameplay. By adapting the replay in step 101, the commentator may be placed in the most interesting location for the gameplay. By steps 102-103, the commentator is given the ability to highlight incidents and communicate with the viewers through gestures, for example by pointing. Further, the commentator is given the ability to move within the event in space and time, by walking in the studio during the replay in step 101 and/or by skipping forward in the replay of the event in the studio 20. By walking around, the commentator may discover details of the event that might go unnoticed in a conventional commentator setting. Thus, the method 100 generally allows the observer (commentator) to explore the event in a new way.

FIG. 4 shows a method 200 that is an example implementation of the method 100 in FIG. 3. The method 200 comprises a step 201 of capturing video data of an event at a venue. Step 201 may be performed by use of the cameras 2 in FIG. 1A. The video data includes images from the cameras 2, and the images may include two-dimensional pixels or three-dimensional voxels. Step 202 corresponds to the in-studio replay of step 101 in FIG. 3 and is performed to provide an observer in the physical space within the studio 20 with an immersive experience of the event. In step 202, a sequence of steps 202a-202d is repeatedly performed at successive time steps. In step 202a, a momentary viewpoint 10a of the observer 10 in the physical space is determined. In some embodiments, the momentary viewpoint 10a is obtained by motion capture, by use of any of the techniques discussed in relation to the method 100. The momentary viewpoint 10a may be given by a location and body pose determined by step 203 (below) at the current time step. In step 202b, the momentary viewpoint in the physical space is converted into a corresponding viewpoint of the observer as located in the event at the venue. This "corresponding viewpoint" is denoted "apparent viewpoint" in the discussion above. The skilled person understands that the conversion in step 202b is straight-forward since both the momentary viewpoint 10a and the latest rendered representation of the event in the studio 20 have a known relation to the studio coordinate system 25. In step 202c, a rendered representation of the event is generated, based on the video data from step 201, as seen from the corresponding (apparent) viewpoint of step 202b. In step 202d, the rendered representation from step 202c is displayed to the observer within the physical space. Steps 202a-202d are repeated during a display time period to provide the immersive experience of the event to the observer. It is realized that successive repetitions of step 202c generate the "first rendered video" discussed above with reference to step 101.

The method 200 further comprises a step 203 of determining, and optionally recording, a time sequence of momentary locations and body poses of the observer during the display time period. Step 203 corresponds to step 102 of the method 100 in FIG. 3. It may be noted that step 203 need not be performed for the entire display time period. However, if so, the momentary viewpoint of step 202a needs to be determined separately from step 203.

In step 204, a second rendered video is generated, based on the video data from step 201 and the time sequence of momentary locations and body poses of the observer during the display time period from step 203. The second rendered video is generated to include the observer as an added actor in the event and may be generated for the entire display time period or part thereof. Step 204 corresponds to step 103 of the method 100 in FIG. 3. Step 204 may be performed concurrently with steps 202-203 or in a postproduction phase.

It is to be understood that the observer is placed within the event in the second rendered video in correspondence with the location of the observer relative to the rendered event in the studio during the display time period. Thus, the momentary location (and body pose) of the observer at the venue in the second rendered video is matched to the momentary location (and body pose) of the observer at the rendered venue in the studio.

As shown by dashed lines, step 204 may comprise a step 204a of rendering the event as seen by the observer. Here, the second rendered video is generated to represent the event as seen from the personal viewpoint of the observer as located within the event. The observer is thereby added as an actor in the second rendered video.

Alternatively or additionally, step 204 may comprise a step 204b of rendering the event as seen from an external viewpoint at the venue. An example of such a rendering from an external viewpoint is shown in FIG. 1B. Any external viewpoint may be used, including a top plan view or any perspective view. Plural external viewpoints may be used in the second rendered video.

In some embodiments, step 204 comprises a step 204c of allowing the observer to switch between steps 204a and 204b. Thus, the observer is given the ability to control the rendering in step 204 during the display time period. For example, the observer may enter a view switch command on a handheld device (below). Step 204c allows the observer to take the role as video editor. This will facilitate for the observer to convey relevant details about the event to a viewer of the second rendered video. For example, an external viewpoint (step 204b) may be used to show to the viewer where a preceding or subsequent personal viewpoint (step 204a) is located within the venue.

As seen in FIG. 4, step 202 may comprise a step 202e of adjusting the replay speed based on observer input. In other words, the observer is allowed to adjust the playback speed of the rendered representations (first rendered video) during the display time period. For example, the observer may enter a speed change command on a handheld device (below). Step 202e allows the observer to change the relation between a movement in the studio and a movement in the venue. The available space in the studio may be much smaller than the venue, for example when the venue is an arena or a stadium. Thus, should the observer wish to continuously move over a distance in the venue that exceeds the available travel distance in the studio, this may be achieved by changing the replay speed of the rendered event in the studio. For example, the change in replay speed will allow the observer to run along a rendered football player in the studio.

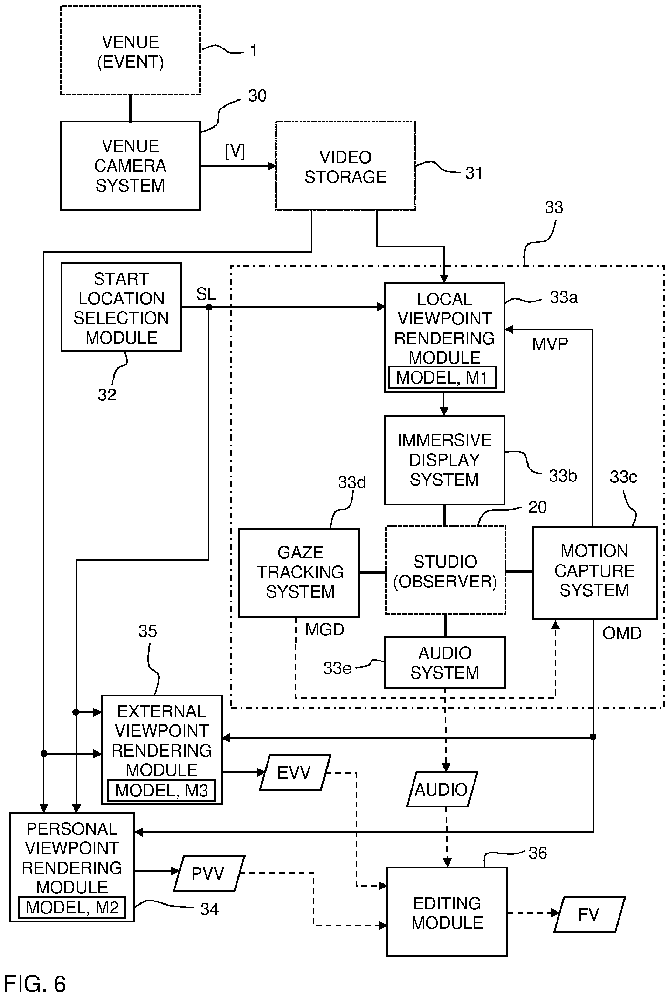

FIG. 6 is a block diagram of an example system for generation of augmented video of an event in accordance with embodiments. The system includes a venue camera system 30, which is installed at the venue 1 where the event is taking place. For example, the camera system 30 may include the cameras 2 in FIG. 1A. The camera system 30 is configured to generate the above-mentioned video data [V] of the event. The video data is stored in computer memory in a video storage 31. The system comprises a sub-system 33 for immersive display of the event to the observer. The sub-system 33 comprises the studio 20, which is provided with an immersive display system 33b, a motion capture system 33c, a gaze tracking system 33d, and an audio system 33e. The immersive display system 33b comprises one or more projectors or displays (cf. 21 in FIG. 2). The motion capture system 33c may be a computer vision system, which is configured to determine and output a time sequence of locations and body poses of an individual ("observer") in the studio. This time sequence is designated "observer motion data" or OMD in FIG. 6. The motion capture system 33 is also configured to determine and output the momentary viewpoint, MVP, of the observer in the studio. As noted above, the MVP may be given by the location and orientation of the observer's head in the studio. The gaze tracking system 33d is optional and configured to detect and output the momentary gaze direction, MGD, of the observer in the studio. The motion capture system 33c may be configured to determine MVP based on MGD relative to the head orientation. The audio system 33e is optional and configured to record audio data at the studio, for example a spoken commentary by the observer.

The sub-system 33 further comprises a local viewpoint rendering module 33a ("first rendering device"), which is configured to perform step 202c in FIG. 4, based on MVP obtained from the motion capture system 33c and video data retrieved from the video storage 31. As shown, the module 33a may comprise a predefined model M1 which is used when the event is rendered for display to the observer in the studio. The predefined model M1 may be similar to models used by conventional game engines. The model M1 may define geometry, texture, lighting, and shading information of the venue and all actors in the event.

A start location selection module 32 is included to provide a start location, SL, for the rendering by module 33a. The start location is a location at the venue and is where the observer is to be located at the venue when the immersive display is started.

The system comprises a personal viewpoint rendering module 34, which is configured to perform step 204a in FIG. 4, based on SL from module 32, OMD from the motion capture system 33c and video data from the video storage 31. As shown, the module 34 may comprise a predefined model M2 which is used in rendering the event as seen by the observer when included in the event. It is understood that the module 34 is configured to determine the apparent viewpoint of the observer from the OMD. This may require additional data (not indicated in FIG. 6) that defines how the event was displayed to the observer in the studio. As shown, the module 34 is configured to output a rendered video, PVV (personal viewpoint video).

The system also comprises an external viewpoint rendering module 35, which is configured to perform step 204b in FIG. 4, based on SL from module 32, OMD from the motion capture system 33c and video data from the video storage 31. As shown, the module 35 may comprise a predefined model M3 which is used in rendering the event as seen from an external viewpoint. Compared to models M1, M2, the model M3 also defines the representation or appearance of the observer. Like above, additional data may be required to adequately position the observer within the venue based on OMD. As shown, the module 35 is configured to output a rendered video, EVV (external viewpoint video).

The system in FIG. 6 may be seen to include a "second rendering device", which encompasses the modules 34, 35. In an alternative, the modules 34, 35 are merged into a single module. In a further alternative, only one of the modules 34, 35 is included in the system and thus in the second rendering device.

It is understood that, depending on implementation, the above-mentioned second rendered video may be one of EVV or PVV, or a combination thereof.

In the illustrated example, the system further includes an editing module 36, which is configured to enable editing of EVV and PVV into a final video, FV. The editing module 36 may allow a human editor to combine EVV and PVV, and optionally other material such as ordinary 2D video, into the FV for presentation to viewers, for example by streaming or broadcasting. In an alternative, the editing module 36 is configured to automatically generate FV by stitching together EVV and PVV. For example, the EVV and PVV may be automatically generated and combined based on views that have been selected by the observer during the display time period (cf. step 204c in FIG. 4). As shown, the editing module 36 may also add audio data to the FV in time-synchronization with the rendered event.

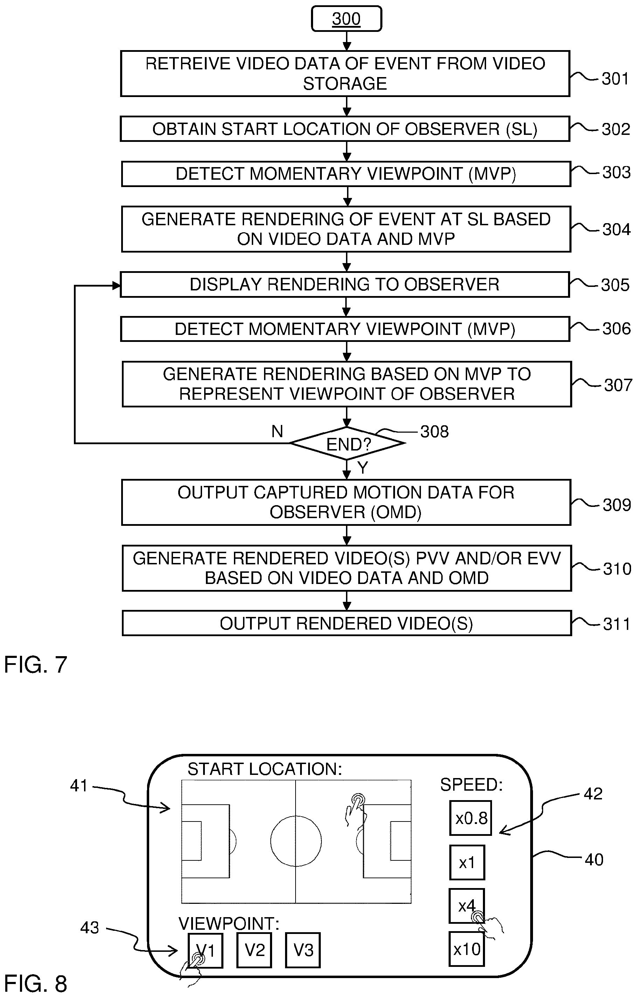

FIG. 7 is a flow chart of a method 300 for operating the system in FIG. 6 to generate augmented video. In step 301, the module 33a is operated to obtain video data of the event from the video storage 31. In step 302, the module 33a is operated to obtain the start location, SL, of the observer from the module 32. The start location may be predefined, entered by a producer, or entered by the observer, for example on a handheld device (below). In step 303, the motion capture system 33c is operated to repeatedly detect the momentary viewpoint, MVP, of the observer. Optionally, the gaze tracking system 33d is also operated to repeatedly detect the momentary gaze direction, MGD, so that MVP may be generated to account for MGD. In step 304, the module 33a is operated to obtain a current MVP from the system 33c, convert the current MVP into an apparent viewpoint of the observer at the start location, and generate a current rendering of the event for the apparent viewpoint. In step 305, the display system 33b is operated to display the latest rendering to the observer. In step 306, the module 33a is operated to obtain a current MVP from the system 33c. In step 307, the module 33a is operated to convert the current MVP into an apparent viewpoint of the observer and generate a current rendering of the event for the apparent viewpoint. It is to be noted that any movement of the observer within the studio between step 304 and step 306 is reflected in the MVP, which defines both the location and the orientation of the observer's head at each time step. Steps 305-307 are then repeated until a termination criterion is fulfilled in step 308, at which the method 300 proceeds to step 309. When the termination criterion is fulfilled, the display time period is ended. In some embodiments, the duration of the display time period is predefined, or entered by a producer, the observer or another user, and the termination criterion is fulfilled when the duration is achieved. In some embodiments, the termination criterion is fulfilled when a dedicated termination command is received by the module 33a. The termination command may be input by a producer or the observer.

In step 309, the motion capture system 309 is operated to output captured motion data, OMD, for the observer during the display time period. Step 309 may be performed continuously during the display time period or after its completion.

In step 310, module 34 is operated to generate PVV and/or module 35 is operated to generate EVV based on the video data and the OMD. Step 310 may be performed in (near) realtime during the display time period or be performed off-line at any time point after the display time period.

In step 311, the rendered video(s) from step 310 is output. Step 311 may provide the rendered video(s) for presentation to a viewer, or for further processing into a final video, FV, by the editing module 36.

It is realized that steps 301-308 correspond to step 101 in FIG. 3 and step 202 in FIG. 4, and that step 310 corresponds to step 103 in FIG. 3 and step 204 in FIG. 4. Any and all examples and embodiments described in relation in FIG. 3 and/or FIG. 4 are equally applicable to FIG. 6, and vice versa.

As understood from the foregoing, step 302 may involve allowing the observer to select the start location in the venue. FIG. 8 shows a handheld device 40 that provide a mechanism 41 for selecting the start location. In the illustrated example, the mechanism 41 is a touch-sensitive display surface that shows the venue and allows a user to select the start location by touching the display surface at a desired location within the venue. The handheld device 40 may be carried by the observer in studio. Thereby, the observer is capable of controlling the playback in the studio by selecting a start location for each first rendered video to be displayed in the studio during a respective display time period. In an alternative, the mechanism 41 may allow the user to select among a set of predefined start locations.

The handheld device 40 in FIG. 8 also provides a mechanism 42 for selecting the replay speed during the display time period. Any selection by mechanism 42 will affect the replay via step 202e in FIG. 4. In the illustrated example, the mechanism 42 is provided in the form of buttons corresponding to different predefined speeds relative to the normal (actual) speed of the event. In an alternative, the mechanism 42 may allow the user to select any speed within a range, for example via a slider on the handheld device 40.

The handheld device 40 in FIG. 8 also provides a mechanism 43 for selecting the viewpoint of a second rendered video to be generated in step 310. In the illustrated example, the mechanism 43 is provided in the form of buttons corresponding to different viewpoints. The mechanism 43 allows the observer to take the role as producer, by deciding when to switch between different viewpoints. For example, the mechanism 43 may allow for selection between the observer's personal viewpoint and any number of different external viewpoints. If step 310 is performed in realtime during the display time period, the mechanism 43 may trigger either module 34 or module 35 depending on viewpoint. If step 310 is performed off-line, a switch file containing each selected viewpoint and an associated a time stamp may be generated by the handheld device 40. The switch file may then be used for controlling the modules 34, 35 to produce the second rendered video in accordance with the observer's desires. In a variant, the switch file may be used by the editing module 46 to combine snippets from EVV and PVV according to the observer's desires.

In all examples above, the event is a real-life event, which thus takes places in the real world at an existing venue. However, it is conceivable that the event is a virtual event that takes place at an existing or virtual venue. This means that the video data has been rendered to represent the virtual event at the venue. In other words, the video data is a rendered recording of the event. The foregoing description is equally applicable to this type of video data.

In yet another example, the event has not taken place before the display time period but is performed by the observer while a rendering of a venue is displayed in the studio. In this example, the video data is not a pre-existing recording of an event but is generated dynamically during the display time period. The observer is given the ability to interact with the displayed rendering to alter the course of the event, much like a player of a computer game is able to interact with the game to change the course of the game through the actions performed by the player. The foregoing description is applicable to this type of studio-produced event with dynamically degenerated video data, with the difference that video data is not used to generate the rendering of the event in the studio (steps 101, 202c, 304). However, video data of the event is used when generating the second rendered video (steps 103, 204, 310).

In a non-limiting example of a studio-produced event, the studio may be configured as a series of rooms. Virtual interactive content is displayed on the walls and floor of the rooms. The virtual interactive content may be an interactive game. For example, the virtual interactive content may be configured to give a visitor ("observer") the perception of being surrounded by enemies and the visitor may be given the task of passing through the rooms unscathed. The user may be given the opportunity to fight or evade the enemies. The virtual interactive content is rendered in response to actions taken by the visitor, and the actions may be detected through the motion capture system. By recording the location and 3D pose of the visitor during a display time period in the studio (cf. step 102), a second rendered video can be generated that includes the visitor as an added actor in the event (cf. step 103). In the second rendered video, the virtual content that has been displayed in the studio during the display time period is reproduced together with the actions performed by the visitor, from the personal viewpoint of the visitor and/or from one or more external viewpoints. The second rendered video shows a unique event, which has been generated through interaction with the visitor, and may be of great value to the visitor as a record of the gameplay. The second rendered video may be given or sold to the visitor as a souvenir.

The methods described herein may be performed under control of one or more computer resources. Likewise, the processing in the system of FIG. 6 may be performed by one or more computer resources. The operation of the computer resource may be at least partly controlled by software. The computer device may include computer memory and one or more processors. The software may be provided to computer resource in the form of a control program comprising computer instructions which, when executed by the one or more processors, cause the computer resource to perform and/or initiate any of the methods, operations, procedures, functions, or steps described herein. The control program may be supplied on a computer-readable medium, which may be a tangible (non-transitory) product (for example, a magnetic medium, optical disk, read-only memory, flash memory, etc.) or a propagating signal.

In the following, clauses are recited to summarize some aspects and embodiments as disclosed in the foregoing.

C1. A method of generating augmented video of an event at a venue, said method comprising: determining (202a) a momentary viewpoint of an observer in a physical space that allows an observer to move freely within the physical space; converting (202b) the momentary viewpoint of the observer in the physical space into a corresponding viewpoint of the observer as located in the event at the venue; generating (202c) a rendered representation of the event from said corresponding viewpoint, and; displaying (202d) the rendered representation within the physical space, wherein said determining (202a), said converting (202b), said generating (202c) and said displaying (202d) are repeated to provide an immersive experience of the event to the observer in the physical space during a display time period, said method further comprising: generating (204), based on video data of the event and the time sequence of momentary locations and body poses of the observer during the display time period, a rendered video that includes the observer as an added actor in the event.

C2. The method of C1, wherein the momentary viewpoint of the observer in the physical space is determined from the time sequence of momentary locations and body poses of the observer in the physical space.

C3. The method of C1 or C2, wherein said converting (202b) during the display time period results in a time sequence of corresponding viewpoints of the observer as located in the event at the venue, and wherein the rendered video is at least partly generated (204a) to represent the event as seen from the corresponding viewpoints of the observer.

C4. The method of any one of C1-C3, wherein the rendered video is at least partly generated (204b) to represent the observer as the added actor in the event as seen from an external viewpoint at the venue onto the observer.

C5. The method of C3, further comprising: allowing (204c) the observer to switch between generating (204a) the rendered video to represent the event as seen from the corresponding viewpoints of the observer, or generating (204b) the rendered video to represent the observer as the added actor in the event as seen from an external viewpoint at the venue onto the observer.

C6. The method of C4 or C5, further comprising converting the time sequence of locations in the physical space to a time sequence of corresponding locations in the event at the venue, wherein the observer, when generated as the added actor as seen from the external viewpoint, is positioned in the event at the venue in accordance with the time sequence of corresponding locations.

C7. The method of C6, wherein a body of the observer, when generated as the added actor as seen from the external viewpoint, is rendered to move in accordance with the time sequence of momentary body poses.

C8. The method of C7, wherein the time sequence of momentary locations and body poses of the observer in the physical space during the display time period is determined by volumetric capture of the observer during the display time period, and wherein the body of the observer is represented in the rendered video by a photorealistic reproduction of the observer given by the volumetric capture.

C9. The method of any preceding clause, further comprising: allowing (302) the observer to select a start location in the venue, wherein the rendered representation of the event is generated with the observer at the start location when the display time period is started.

C10. The method of any preceding clause, further comprising: allowing (202e) the observer to adjust a playback speed of a time sequence of rendered representations during the display time period.

C 11. The method of any preceding clause, wherein the momentary viewpoint of the observer is determined based on a momentary three-dimensional orientation of the observer's head in the physical space.

C12. The method of C11, wherein the momentary three-dimensional orientation of the observer's head is determined by computer vision, based on images of the observer from cameras at the physical space.

C13. The method of C11 or C12, wherein the momentary viewpoint is further determined based on a momentary gaze direction of the observer.

C14. The method of any preceding clause, wherein the time sequence of momentary locations and body poses of the observer in the physical space are determined by motion capture, based on images of the observer from cameras at the physical space.

C15. The method of any preceding clause, further comprising including (104) time-synchronized audio data in the rendered video.

C16. The method of C15, further comprising recording at least part of the time-synchronized audio data as a spoken commentary by the observer during the display time period.

C17. The method of C15 or C16, wherein the time-synchronized audio data comprises sound recorded by one or more microphones at the venue during the event.

C18. The method of C17, wherein the sound is reproduced in the time-synchronized audio data as it would have been perceived by the observer as the added actor in the event at the venue.

C19. The method of any preceding clause, wherein the rendered representation is generated by rendering one or more objects (11', 12') with a position and an orientation that are adapted to the corresponding viewpoint of the observer in the event at the venue.

C20. The method of C19, wherein the momentary viewpoint comprises a location and an orientation of the observer's head in the physical space, and wherein the corresponding viewpoint comprises a corresponding location and a corresponding orientation of the observer's head in the event at the venue.

C21. The method of any preceding clause, wherein the observer, by the immersive experience, perceives a three-dimensional environment representing the event.

C22. An arrangement for generating augmented video of an event at a venue (1), said arrangement comprising: a first rendering device (33a), which is configured to generate a first rendered video of the event; a display system (33b), which is configured to display the first rendered video within a physical space (20) that allows an observer (10) to move freely within the physical space (20); and a computer vision system (33c), which is configured to determine momentary locations and body poses of the observer (10) in the physical space (20), wherein the first rendering device (33a), during a display time period, is configured to generate the first rendered video based on momentary viewpoints of the observer (10) given by the momentary locations and body poses, such that the display system (33b) is operable to provide an immersive experience of the event to the observer (10) in the physical space (20), and wherein said arrangement further comprises a second rendering device (34, 35), which is configured to generate a second rendered video that includes the observer (10) as an added actor in the event, based on video data of the event and the momentary locations and body poses of the observer (10) determined by the computer vision system (33c) during the display time period.

C23. The arrangement of C22, wherein the computer vision system (33c) is configured to determine the momentary viewpoints to comprise a location and an orientation of the observer's head in the physical space (20).

C24. The arrangement of C22 or C23, which is configured to convert the momentary viewpoints of the observer (10) into corresponding viewpoints of the observer (10) in the event at the venue (1), wherein the second rending device (34, 35) is configured to generate the second rendered video to at least partly represent the event as seen from the corresponding viewpoints of the observer (10).

C25. The arrangement of any one of C22-C24, wherein the second rendering device (34, 35) is configured to generate the second rendered video to at least partly represent the observer as the added actor in the event as seen from an external viewpoint at the venue (1) onto the observer (10).

C26. The arrangement of C24, further comprising a switch mechanism (43) which is configured to allow the observer (10) to switch the second rendering device (34, 35) between generating the second rendered video to represent the event as seen from the corresponding viewpoints of the observer (10), or generating the second rendered video to represent the observer (10) as the added actor in the event from an external viewpoint at the venue (1) onto the observer (10).

C27. The arrangement of C25 or C26, wherein the second rendering device (34, 35) is configured to convert the locations in the physical space (20) to corresponding locations in the event at the venue (1), and position the observer (10) in the event at the venue (1) in accordance with the corresponding locations when generating the second rendered video to represent the observer (10) from the external viewpoint.

C28. The arrangement of C27, wherein the second rendering device (34, 35) is configured to render a body of the observer (1) to move in accordance with the momentary body poses when generating the second rendered video to represent the observer (10) from the external viewpoint.

C29. The arrangement of any one of C22-C28, further comprising a start selection mechanism (41) which is configured to allow the observer (10) to select a start position in the venue (1), wherein the first rendering device (33a) is configured to generate the first rendered video with the observer (10) at the start position at start of the display time period.

C30. The arrangement of any one of C22-C29, further comprising a speed selection mechanism (42) which is configured to allow the observer (10) to adjust a playback speed of the first rendered video when displayed by the display system (33b) during the display time period.

C31. The arrangement of any one of C26, C29 or C30, further comprising a handheld device (40), which comprises at least one the switch mechanism (43), the start selection mechanism (41), or the speed selection mechanism (42).

C32. The arrangement of any one of C22-C31, wherein the computer vision system (33c) is configured to determine the momentary locations and body poses based on images of the observer (10) from cameras (23) at the physical space (20).

C33. The arrangement of any one of C22-C32, wherein the computer vision system (33c) is configured to determine the momentary viewpoints based on momentary three-dimensional orientations of the observer's head in the physical space (20) given by the momentary body poses of the observer (10) in the physical space (20).

C34. The arrangement of C32 or C33, wherein the computer vision system (33c) is configured to determine the momentary viewpoints based on momentary gaze directions (MGD) of the observer (10) determined by a gaze tracking system (33d) at the physical space (20).

C35. The arrangement of any one of claims C22-C34, further comprising an editing device (36), which is configured to include time-synchronized audio data in the second rendered video.

## Claims

1. A method of generating augmented video of an event at a venue, said method comprising:
determining (202a) a momentary viewpoint of an observer in a physical space that allows an observer to move freely within the physical space,
converting (202b) the momentary viewpoint of the observer in the physical space into a corresponding viewpoint of the observer as located in the event at the venue,
generating (202c) a rendered representation of the event from said corresponding viewpoint, and
displaying (202d) the rendered representation within the physical space,
wherein said determining (202a), said converting (202b), said generating (202c) and said displaying (202d) are repeated to provide an immersive experience of the event to the observer in the physical space during a display time period,
said method further comprising:
generating (204), based on video data of the event and a time sequence of momentary locations and body poses of the observer during the display time period, a rendered video that includes the observer as an added actor in the event.

2. The method of claim 1, wherein the momentary viewpoint of the observer in the physical space is determined from the time sequence of momentary locations and body poses of the observer in the physical space.

3. The method of claim 1 or 2, wherein said converting (202b) during the display time period results in a time sequence of corresponding viewpoints of the observer as located in the event at the venue, and wherein the rendered video is at least partly generated (204a) to represent the event as seen from the corresponding viewpoints of the observer.

4. The method of any one of claims 1-3, wherein the rendered video is at least partly generated (204b) to represent the observer as the added actor in the event as seen from an external viewpoint at the venue onto the observer.

5. The method of claim 3, further comprising: allowing (204c) the observer to switch between generating (204a) the rendered video to represent the event as seen from the corresponding viewpoints of the observer, or generating (204b) the rendered video to represent the observer as the added actor in the event as seen from an external viewpoint at the venue onto the observer.

6. The method of claim 4 or 5, further comprising: converting the time sequence of locations in the physical space to a time sequence of corresponding locations in the event at the venue, wherein the observer, when generated as the added actor as seen from the external viewpoint, is positioned in the event at the venue in accordance with the time sequence of corresponding locations.

7. The method of claim 6, wherein a body of the observer, when generated as the added actor as seen from the external viewpoint, is rendered to move in accordance with the time sequence of momentary body poses.

8. The method of claim 7, wherein the time sequence of momentary locations and body poses of the observer in the physical space during the display time period is determined by volumetric capture of the observer during the display time period, and wherein the body of the observer is represented in the rendered video by a photorealistic reproduction of the observer given by the volumetric capture.

9. The method of any preceding claim, further comprising: allowing (302) the observer to select a start location in the venue, wherein the rendered representation of the event is generated with the observer at the start location when the display time period is started.

10. The method of any preceding claim, further comprising: allowing (202e) the observer to adjust a playback speed of a time sequence of rendered representations during the display time period.

11. The method of any preceding claim, wherein the momentary viewpoint of the observer is determined based on a momentary three-dimensional orientation of the observer's head in the physical space, and wherein the momentary viewpoint is further determined based on a momentary gaze direction of the observer.

12. The method of any preceding claim, wherein the observer, by the immersive experience, perceives a three-dimensional environment representing the event.

13. An arrangement for generating augmented video of an event at a venue (1), said arrangement comprising:
a first rendering device (33a), which is configured to generate a first rendered video of the event;
a display system (33b), which is configured to display the first rendered video within a physical space (20) that allows an observer (10) to move freely within the physical space (20); and
a computer vision system (33c), which is configured to determine momentary locations and body poses of the observer (10) in the physical space (20),
wherein the first rendering device (33a), during a display time period, is configured to generate the first rendered video based on momentary viewpoints of the observer (10) given by the momentary locations and body poses, such that the display system (33b) is operable to provide an immersive experience of the event to the observer (10) in the physical space (20), and
wherein said arrangement further comprises a second rendering device (34, 35), which is configured to generate a second rendered video that includes the observer (10) as an added actor in the event, based on video data of the event and the momentary locations and body poses of the observer (10) determined by the computer vision system (33c) during the display time period.

14. The arrangement of claim 13, which is configured to convert the momentary viewpoints of the observer (10) into corresponding viewpoints of the observer (10) in the event at the venue (1), wherein the second rending device (34, 35) is configured to generate the second rendered video to at least partly represent the event as seen from the corresponding viewpoints of the observer (10).

15. The arrangement of claim 13 or 14, wherein the second rendering device (34, 35) is configured to generate the second rendered video to at least partly represent the observer as the added actor in the event as seen from an external viewpoint at the venue (1) onto the observer (10).
